# EUROPEAN PATENT APPLICATION

(11) **EP 4 827 190 A1**
(43) Date of publication of application: **21.10.2026**
(21) Application number: 24904010.6
(22) Date of filing: 14.11.2024
(51) Int. Cl.: H04W 56/00, H04W 8/24, G01S 19/24, H04W 84/06

(54) **METHOD PERFORMED BY TERMINAL OR NETWORK NODE IN WIRELESS COMMUNICATION SYSTEM, AND DEVICE THEREFOR**

(30) Priority: 14.12.2023 US 202363609884 P
(71) Applicant: LG Electronics Inc., Yeongdeungpo-gu Seoul 07336 (KR)
(72) Inventor: PARK, Haewook, Seoul 06772 (KR); KIM, Kijun, Seoul 06772 (KR)
(74) Representative: Jung, Minkyu
(86) International application number: PCT/KR2024/017974
(87) International publication number: WO 2025/127444

(57) **Abstract**

A method performed by a terminal according to at least one of examples disclosed in the present specification may comprise: receiving configuration information related to a non-terrestrial network (NTN) via network signaling; and determining a timing advance (TA) value for an uplink of the NTN on the basis of the configuration information, wherein the terminal determines the TA value on the basis of a terminal-specific TA parameter for a link between a non-terrestrial node and the terminal, and wherein, on the basis that a global navigation satellite system (GNSS) is not supported or GNSS performance falls below a threshold value, the terminal configures the terminal-specific TA parameter as 0 and then determines the TA value on the basis of a TA offset value included in the configuration information.

## Description

### TECHNICAL FIELD

The present disclosure relates to a wireless communication system, and more particularly, to a method performed by a user equipment (UE) or a network node in a wireless communication system supporting a non-terrestrial network (NTN), and an apparatus therefor.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

A non-terrestrial network (NTN) has been introduced into the new radio (NR) standard. In the NTN, instead of deploying a base station (BS) on the ground, wireless communication services are provided to user equipments (UEs) through a BS deployed in a location other than the ground, such as an artificial satellite (for example, a geostationary orbit satellite, a low earth orbit satellite, a medium earth orbit satellite, or the like), an airplane, an unmanned airship, a drone, or the like.

### DISCLOSURE

### Technical Problem

An object of the present disclosure is to provide a method for enabling a user equipment (UE) and a network node to operate more accurately and efficiently in a wireless communication system supporting a non-terrestrial network (NTN), and an apparatus therefor. According to an embodiment, a method of determining a timing advance (TA) value for a UE that does not support a global navigation satellite system (GNSS) or has insufficient GNSS performance is provided for more accurate and efficient time synchronization.

Other objects may be inferred from the following description.

### Technical Solution

In an aspect of the present disclosure, provided herein is a method performed by a UE. The method may include receiving configuration information related to an NTN through network signaling, and determining a TA value for an uplink of the NTN based on the configuration information. The UE may determine the TA value based on a UE-specific TA parameter for a link between a non-terrestrial node and the UE. Based on the UE not supporting a GNSS or GNSS performance being less than a threshold, the UE may set the UE-specific TA parameter to 0 and then determine the TA value through a TA offset value included in the configuration information.

The TA offset value may be an offset value related to a GNSS error.

The TA value may be determined based on a common TA parameter for a link between the non-terrestrial node and a terrestrial node. Based on the UE not supporting the GNSS or the GNSS performance being less than the threshold, the UE may apply a scaling value to the common TA parameter. The scaling value may be a value configured for the UE by a network or a value reported by the UE to the network.

Based on the UE not supporting the GNSS, a range of the TA value for the UE may be extended beyond a range of a TA value for a UE supporting the GNSS.

Based on the GNSS performance being less than the threshold, the UE may transmit information for requesting a configuration of a window in which the UE does not determine the TA value.

The UE may transmit a UE capability report including at least one of information on whether the GNSS is supported or information on the GNSS performance.

The UE may transmit an uplink signal based on the determined TA value.

In another aspect of the present disclosure, provided herein is a computer-readable non-transitory recording medium having recorded thereon instructions for performing the above-described method.

In another aspect of the present disclosure, provided herein is a device including a memory storing instructions, and a processor configured to perform operations by executing the instructions. The operations of the processor may include receiving configuration information related to an NTN through network signaling, and determining a TA value for an uplink of the NTN based on the configuration information.

The device may determine the TA value based on a device-specific TA parameter for a link between a non-terrestrial node and the device. Based on the device not supporting a GNSS or GNSS performance being less than a threshold, the device may set the device-specific TA parameter to 0 and then determine the TA value through a TA offset value included in the configuration information.

The device may further include a transceiver, and the device may be a UE configured to operate in a wireless communication system.

The device may be a processing device configured to control a UE operating in a wireless communication system.

In another aspect of the present disclosure, provided herein is a method performed by a network node. The method may include transmitting configuration information related to an NTN to a UE through network signaling, and receiving an uplink signal based on a TA value for an uplink of the NTN calculated by the UE. The TA value may be calculated based on a UE-specific TA parameter for a link between a non-terrestrial node and the UE. Based on the UE not supporting a GNSS or GNSS performance being less than a threshold, the UE-specific TA parameter may be set to 0, and the TA value may be calculated through a TA offset value included in the configuration information.

In another aspect of the present disclosure, provided herein is a computer-readable non-transitory recording medium having recorded thereon instructions for performing the above-described method.

In a further aspect of the present disclosure, provided herein is a network node including a memory storing instructions, and a processor configured to perform operations by executing the instructions. The operations of the processor may include transmitting configuration information related to an NTN to a UE through network signaling, and receiving an uplink signal based on a TA value for an uplink of the NTN calculated by the UE. The TA value may be calculated based on a UE-specific TA parameter for a link between a non-terrestrial node and the UE. Based on the UE not supporting a GNSS or GNSS performance being less than a threshold, the UE-specific TA parameter may be set to 0, and the TA value may be calculated through a TA offset value included in the configuration information.

### Advantageous Effects

According to an embodiment, more accurate and efficient time synchronization may be achieved by providing a method of determining a TA value for a UE that does not support a GNSS or has insufficient GNSS performance.

Other effects may be inferred from the following description.

### BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot
FIG. 5 illustrates an exemplary physical downlink shared channel (PDSCH) reception and acknowledgement/negative acknowledgement (ACK/NACK) transmission process.
FIG. 6 illustrates an exemplary physical uplink shared channel (PUSCH) transmission process.
FIG. 7 illustrates an example of setting a positioning protocol.
FIG. 8 illustrates an example of OTDOA.
FIG. 9 illustrates an example of multi-RTT.
FIG. 10 illustrates scenarios for a non-terrestrial network that a user equipment (UE) is capable of access.
FIG. 11 is a diagram for explaining a UE-specific timing advance (TA) and a common TA in an NTN.
FIG. 12 is a diagram for explaining a TA in each NTN scenario.
FIG. 13 is a diagram for explaining the type of cell supported by a satellite.
FIG. 14 is a diagram for explaining scheduling offset parameters in an NTN.
FIG. 15 is a diagram for explaining multi-round trip time (multi-RTT) measurement based on a single satellite.
FIG. 16 is a diagram for explaining operations of a UE according to an embodiment.
FIG. 17 is a diagram for explaining operations of a network node according to an embodiment.
FIG. 18 is a diagram for explaining operations of a UE according to an embodiment.
FIG. 19 is a diagram for explaining operations of a network node according to an embodiment.
FIG. 20 is a diagram for explaining operations of a UE according to an embodiment.
FIG. 21 is a diagram for explaining operations of a network node according to an embodiment.
FIGS. 22 to 25 illustrate an example of a communication system 1 and wireless devices applicable to the present disclosure.
FIG. 26 illustrates an NTN applicable to the present disclosure.
FIG. 27 illustrates a very-small-aperture terminal (VSAT) applicable to the present disclosure.

### DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.
- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

### Terms and Abbreviations

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System
- GPS: Global Positioning System
- LCS: LoCation Service
- LMF: Location Management Function
- LPP: LTE Positioning Protocol
- MO-LR: Mobile Originated Location Request
- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference
- ToA: Time of Arrival
- TP: Transmission Point
- TRP: Transmission and Reception Point
- UE: User Equipment
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- TX: Transmitter
- RX: Receiver

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

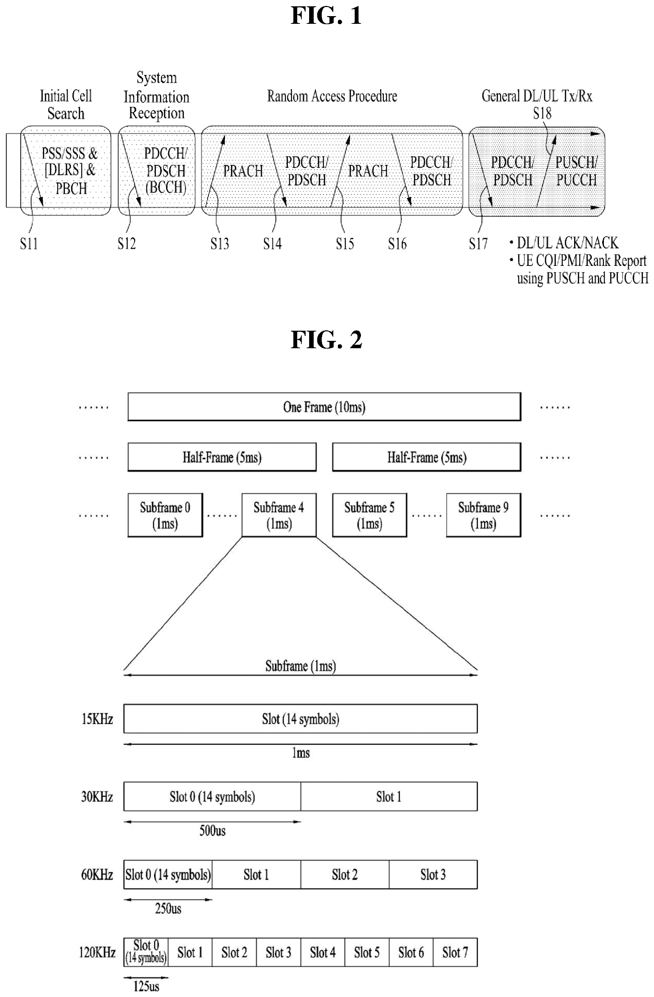

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| N^{slot}_{symb}: Number of symbols in a slot N^{frame,u}ₛₗₒₜ: Number of slots in a frame N^{subframe,u}ₛₗₒₜ: Number of slots in a subframe | | | |

Table 2 illustrates that the number of symbols per slot, the number of slots per frame, and the number of slots per subframe vary according to the SCS when the extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

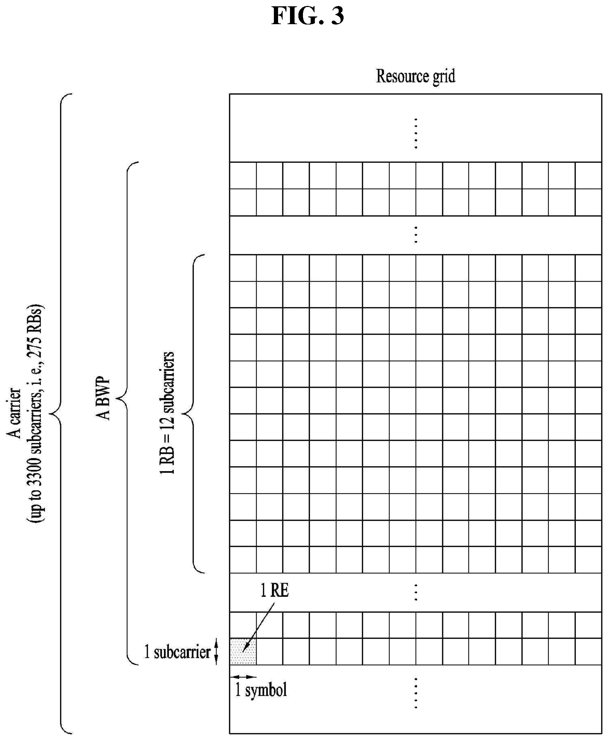

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

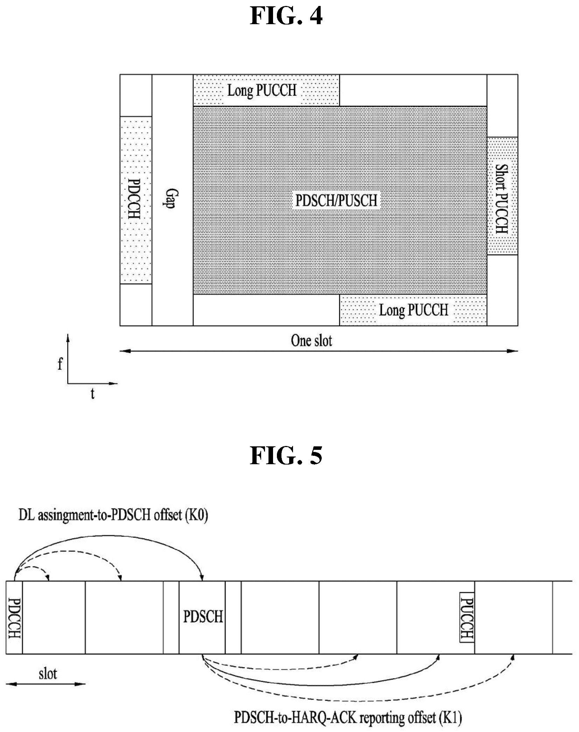

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot #(n+K1). The UCI may include an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

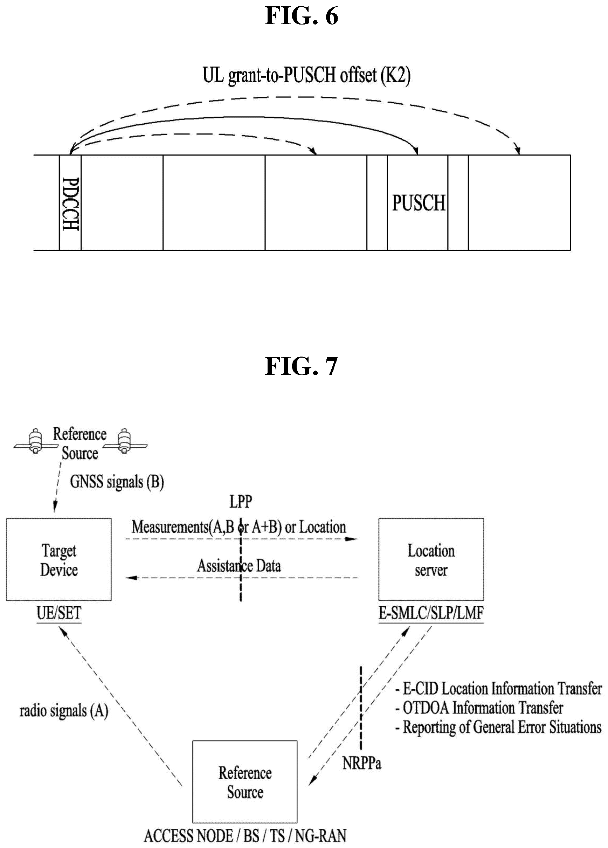

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

### Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 7 is a diagram illustrating an exemplary positioning protocol configuration for positioning a UE, to which various embodiments are applicable.

An LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.
- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which functionspecific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

### OTDOA (Observed Time Difference Of Arrival)

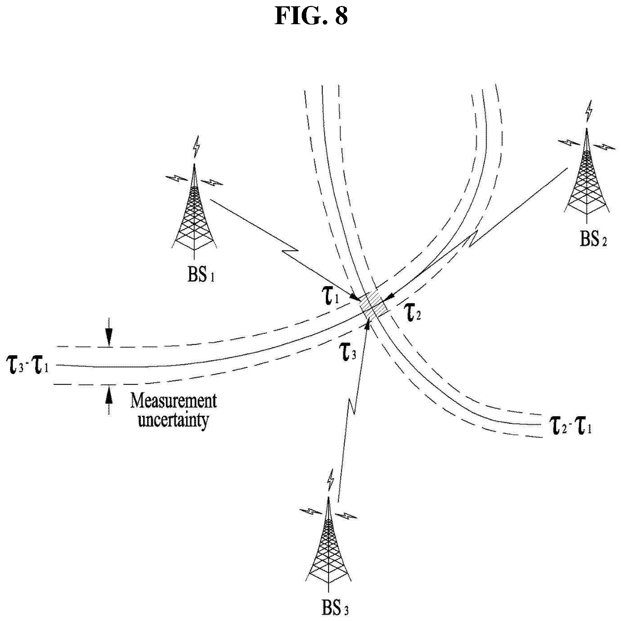

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below. [Equation 1] ${RSTDi}_{, 1} = \frac{\sqrt{{\left({x}_{t}-{x}_{i}\right)}^{2} + {\left({y}_{t}-{y}_{i}\right)}^{2}}}{c} - \frac{\sqrt{{\left({x}_{t}-{x}_{1}\right)}^{2} + {\left({y}_{t}-{y}_{1}\right)}^{2}}}{c} + \left({T}_{i}-{T}_{1}\right) + \left({n}_{i}-{n}_{1}\right)$

In Equation 1, c is the speed of light, {xₜ, yₜ} are (unknown) coordinates of a target UE, {xᵢ, yᵢ} are (known) coordinates of a TP, and {x₁, y₁} are coordinates of a reference TP (or another TP). Here, (Tᵢ-T₁) is a transmission time offset between two TPs, referred to as "real time differences" (RTDs), and nᵢ and n₁ are UE ToA measurement error values.

### E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance (T_{ADV}), and/or AoA

Here, T_{ADV} may be divided into Type 1 and Type 2 as follows.${T}_{ADV} Type 1 = \left(ng-eNB Rx-Tx time difference\right) + \left(UE E-UTRA Rx-Tx time difference\right)$${T}_{ADV} Type 2 = ng - eNB Rx - Tx time difference$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotation.

### UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

### Multi-RTT (round trip time)

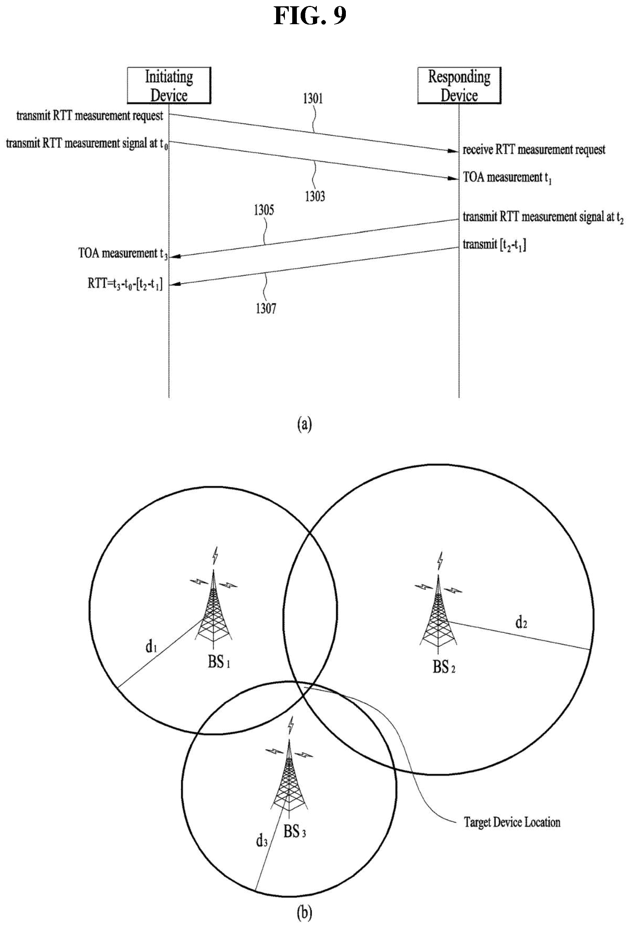

FIG. 9 is a diagram illustrating an exemplary multi-round trip time (multi-RTT) positioning method to which various embodiments are applicable.

Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at t₀ and the responding device may acquire a ToA measurement t₁(1303).

The responding device may transmit an RTT measurement signal at t₂ and the initiating device may acquire a ToA measurement t3 (1305).

The responding device may transmit information about [t₂-t₁], and the initiating device may receive the information and calculate an RTT by Equation 2 (1307). The information may be transmitted and received based on a separate signal or in the RTT measurement signal (1305). [Equation 2] $RTT = {t}_{3} - {t}_{0} - \left[{t}_{2}-{t}_{1}\right]$

Referring to FIG. 9(b), an RTT may correspond to a double-range measurement between two devices. Positioning estimation may be performed from the corresponding information, and multilateration may be used for the positioning estimation. d₁, d₂, and d₃ may be determined based on the measured RTT, and the location of a target device may be determined to be the intersection of the circumferences of circles with radiuses of d₁, d₂, and d₃, in which BS₁, BS₂, and BS₃ (or TRPs) are centered, respectively.

### NTN (Non-Terrestrial Network)

Non-Terrestrial Network (NTN) refers to a network or a network segment, which is configured to use a radio resource in a satellite or an Unmanned Aircraft System (UAS) platform.

In order to ensure a wider coverage or to provide a wireless communication service in a place in which it is not easy to install a wireless communication BS, use of a non-terrestrial network (NR NTN) or LTE NTN service has been considered. An NR or LTE service as an existing terrestrial network (TN) service provides a wireless communication service to UEs by installing a corresponding BS on the ground, but the NTN service provides a wireless communication service to UEs by installing a BS at places on the ground, where an artificial satellite (a geostationary earth orbit, a low-earth orbit, a medium-earth orbit, etc.), an airplanes, an unmanned plane, a drone, or the like is not positioned rather than installing the BS on the ground. Scenarios such as HAPS (high altitude platform) and ATG (air to ground) may be included.

For (Rel-17/18) NTN services, frequency division duplex (FDD) is primarily considered (however, this does not mean that time division duplex (TDD) is completely excluded). It is assumed that the UE has GNSS capability.

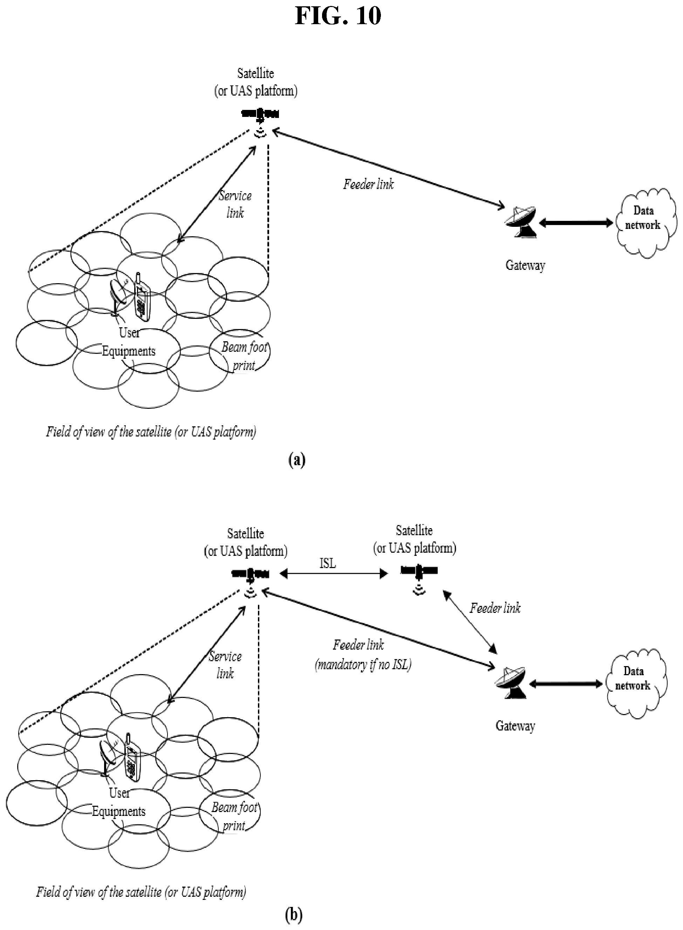

FIG. 10 illustrates exemplary scenarios for an NTN that a UE is capable of access. Specifically, FIG. 10(a) illustrates an NTN scenario based on transparent payload, and FIG. 10(b) illustrates an NTN scenario based on regenerative payload. The transparent payload performs roles such as radio frequency filtering, frequency conversion and amplification, and so on. Thus, waveform signals in a transmission payload do not change. On the other hand, the regenerative payload performs roles such as radio frequency filtering, frequency conversion and amplification as well as demodulation/decoding, switch and/or routing, coding/modulation, and so on. Therefore, all or some of the BS functions may be considered to be mounted on a satellite.

The NTN may be usually characterized by the following factors.
- One or more sat-gateways for connecting the NTN to a common data network:
   A Geostationary Earth Orbiting (GEO) satellite may be provided from one or more sat-gateways disposed in a coverage (e.g., regional or even continental coverage) targeted by a satellite. UEs within a cell may be assumed to be served by only one sat-gateway;
   A non-GEO satellite may be successively served by one or more gat-gateways. A system may ensure a service and feeder link continuity between serving sat-gateways for a time period sufficient to proceed with mobility anchoring and handover.
- Feeder link or wireless link between sat-gateway and satellite (or UAS platform)
- Service link or wireless link between UE and satellite (or UAS platform)
- Satellite (or UAS platform) for implementing one of transparent or regenerative (including onboard processing) payload. Satellite (or UAS platform) may generally generate multiple beams in a service area with a boundary defined by a field of view of the satellite (or UAS platform). The footprint of the beam may be generally elliptical. The field of view of the satellite (or UAS platform) may be determined according to an onboard antenna diagram and the minimum elevation angle.

Transparent payload: Radio frequency filtering, and frequency conversion and amplification. Thus, a waveform signal repeated by a payload is not changed.

Regenerative payload: Demodulation/decoding, switching and/or routing, coding/modulation as well as radio frequency filtering and frequency conversion and amplification. This is practically equivalent to having all or some of functions of a BS (e.g., gNB) on a satellite (or UAS platform).
- Inter-satellite links (ISL) in the case of a satellite group. To this end, the satellite requires a regeneration payload. The ISLs may operate at an RF frequency or a wide band.
- A UE may be served by a satellite (or UAS platform) within a target service area.

Table 3 below shows an example of types of a satellite (or UAS platform).

**[Table 3]**

| Platforms | Altitude range | Orbit | Typical beam footprint size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | notional station keeping position fixed in terms of elevation/azimuth with respect to a given earth point | 200 - 3500 km |
| UAS platform (including HAPS) | 8 - 50 km (20 km for HAPS) | | 5 - 200 km |
| High Elliptical Orbit (HEO) satellite | 400 - 50000 km | Elliptical around the earth | 200 - 3500 km |

### Generally,

- The GEO satellite and the UAS may be used to provide a continental, regional, or local service.
- A Low Earth Orbiting (LEO) and Medium Earth Orbiting (MEO) group may be used to provide a service in both the Northern and Southern Hemispheres. In some cases, constellation may also provide global coverage including a polar region. For later, an appropriate orbital inclination, sufficient generated beams, and inter-satellite links may be required.

A Highly Elliptical Orbiting (HEO) satellite system may also be considered.

Hereinafter, a wireless communication system in an NTN including the following six reference scenarios will be described.
- Circuit orbit and nominal station keeping platform
- Highest Round Trip Delay (RTD) constraint
- Highest Doppler constraint
- Transparent or regenerative payload
- One case with ISL and one case without ISL. In the case of inter-satellite link, a regenerative payload may be required.
- Fixed or steerable beams causing a moving or fixed footprint on the ground.

Six reference scenarios are considered in Tables 4 and 5.

**[Table 4]**

| | Transparent satellite | Regenerative satellite |
|---|---|---|
| GEO based non-terrestrial access network | Scenario A | Scenario B |
| LEO based non-terrestrial access network: | Scenario C1 | Scenario D1 |
| steerable beams | | |
| LEO based non-terrestrial access network: | Scenario C2 | Scenario D2 |
| the beams move with the satellite | | |

**[Table 5]**

| Scenarios | GEO based non-terrestrial access network (Scenario A and B) | LEO based non-terrestrial access network (Scenario C & D) |
|---|---|---|
| Orbit type | notional station keeping position fixed in terms of elevation/azimuth with respect to a given earth point | circular orbiting around the earth |
| Altitude | 35,786 km | 600 km1,200 km |
| Spectrum (service link) | <6 GHz (e.g. 2 GHz) | |
| | >6 GHz (e.g. DL 20 GHz, UL 30 GHz) | |
| Max channel bandwidth capability (service link) | 30 MHz for band < 6 GHz1 GHz for band > 6 GHz | |
| Payload | Scenario A : Transparent (including radio frequency function only) | Scenario C: Transparent (including radio frequency function only) |
| | Scenario B: regenerative (including all or part of RAN functions) | Scenario D: Regenerative (including all or part of RAN functions) |
| Inter-Satellite link | No | Scenario C: NoScenario D: Yes/No (Both cases are possible.) |
| Earth-fixed beams | Yes | Scenario C1: Yes (steerable beams), see note 1Scenario C2: No (the beams move with the satellite) |
| | | Scenario D 1: Yes (steerable beams), see note 1 |
| | | Scenario D 2: No (the beams move with the satellite) |
| Max beam foot print size (edge to edge) regardless of the elevation angle | 3500 km (Note 5) | 1000 km |
| Min Elevation angle for both sat-gateway and user equipment | 10° for service link and 10° for feeder link | 10° for service link and 10° for feeder link |
| Max distance between satellite and user equipment at min elevation angle | 40,581 km | 1,932 km (600 km altitude)3,131 km (1,200 km altitude) |
| Max Round Trip Delay (propagation delay only) | Scenario A: 541.46 ms (service and feeder links)Scenario B: 270.73 ms (service link only) | Scenario C: (transparent payload: service and feeder links) |
| | | 25.77 ms (600km) |
| | | 41.77 ms (1200km) |
| | | Scenario D: (regenerative payload: service link only) |
| | | 12.89 ms (600km) |
| | | 20.89 ms (1200km) |
| Max differential delay within a cell (Note 6) | 10.3 ms | 3.12 ms and 3.18 ms for respectively 600km and 1200km |
| Max Doppler shift (earth fixed user equipment) | 0.93 ppm | 24 ppm (600km)21ppm(1200km) |
| Max Doppler shift variation (earth fixed user equipment) | 0.000 045 ppm/s | 0.27ppm/s (600km)0.13ppm/s(1200km) |
| User equipment motion on the earth | 1200 km/h (e.g. aircraft) | 500 km/h (e.g. high speed train)Possibly 1200 km/h (e.g. aircraft) |
| User equipment antenna types | Omnidirectional antenna (linear polarisation), assuming 0 dBi Directive antenna (up to 60 cm equivalent aperture diameter in circular polarisation) | |
| User equipment Tx power | Omnidirectional antenna: UE power class 3 with up to 200 mWDirective antenna: up to 20 W | |
| User equipment Noise figure | Omnidirectional antenna: 7 dB Directive antenna: 1.2 dB | |
| Service link | 3GPP defined New Radio | |
| Feeder link | 3GPP or non-3GPP defined Radio interface | 3GPP or non-3GPP defined Radio interface |

Reference 1: Each satellite may steer a beam to a fixed point on the Earth by using beamforming technology. This may be applied for a time corresponding to visibility of the satellite.

Reference 2: The max delay variation in the beam (UE fixed on the ground) may be calculated based on the minimum elevation angle (Min Elevation angle) for both the gateway and the UE.

Reference 3: The maximum differential delay in the beam may be calculated based on a diameter of the maximum beam footprint at the lowest point (at nadir).

Reference 4: The speed of light used to calculate the delay may be 299,792,458 m/s.

Reference 5: The size of the maximum beam footprint of the GEO may be determined based on GEO High Throughput system technology of the current state under the assumption that there is a spot beam at a coverage edge (low altitude).

Reference 6: The maximum differential delay at a cell level may be calculated in consideration at a beam level delay for the largest beam size. When the size of the beam is small or medium, the cell may include two or more beams. However, the cumulative differential delay of all beams in the cell may not exceed the maximum differential delay at a cell level in Table 10.

The NTN-related description of the present specification may be applied to an NTN GEO scenario and any nongeostationary orbit (NGSO) scenario having a circuit orbit with an altitude equal to or greater than 600 km.

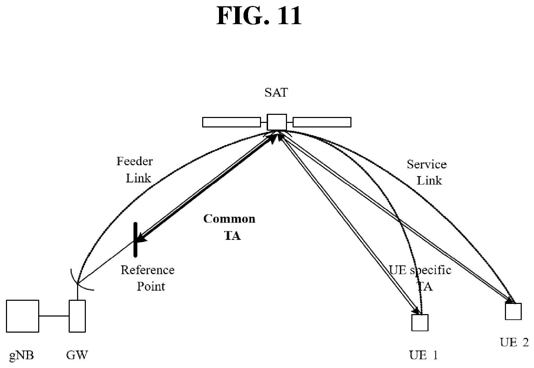

FIG. 11 is a diagram for explaining a UE-specific timing advance (TA) and a common TA in an NTN.

In the NTN, the distance between a satellite and a UE changes due to the movement of the satellite, regardless of the movement of the UE. To overcome this issue, the UE may determine the location of the UE based on the GNSS and calculate the UE-specific TA, which is a round trip delay (RTD) between the UE and the satellite, based on satellite orbit information provided by the BS.

The common TA may refer to an RTD between the gNB (i.e., reference point) on the ground and the satellite. Here, the reference point may mean a place where DL and UL frame boundaries match. The common TA may be defined as what the BS indicates to the UE. If the reference point is on the satellite, the common TA may not be indicated. If the reference point is at the gNB on the ground, the common TA may be used to compensate for the RTD between the gNB and the satellite.

As shown in FIG. 11, in the Rel-17 NTN, the UE may autonomously calculate a TA based on the GNSS capability of the UE and information provided by the BS (e.g., ephemeris information), which is referred to as the UE-specific TA. A TA calculated based on common TA parameters provided by the BS may be referred to as the common TA. Table 6 shows the final TA based thereon defined in TS 38.211.

**[Table 6]**

| |
|---|
| Uplink frame number *i* for transmission from the UE shall start ${T}_{TA} = \left({N}_{TA}+{N}_{TA , offset}+{N}_{TA , adj}^{common}+{N}_{TA , adj}^{UE}\right) {T}_{c}$ before the start of the corresponding downlink frame at the UE where |
| - *N*_{TA} and *N*_{TA,offset} are given by clause 4.2 of [5, TS 38.213], except for msgA transmission on PUSCH where *N*_{TA} = 0 shall be used; |
| - ${N}_{TA , adj}^{common}$ is derived from the higher-layer parameters *TACommon, TACommonDrift,* and *TACommonDriftVariation* if configured, otherwise ${N}_{TA , adj}^{common} = 0$; |
| - ${N}_{TA , adj}^{UE}$ is computed by the UE based on UE position and serving-satellite-ephemeris-related higher-layers parameters if configured, otherwise ${N}_{TA , adj}^{UE} = 0$. |

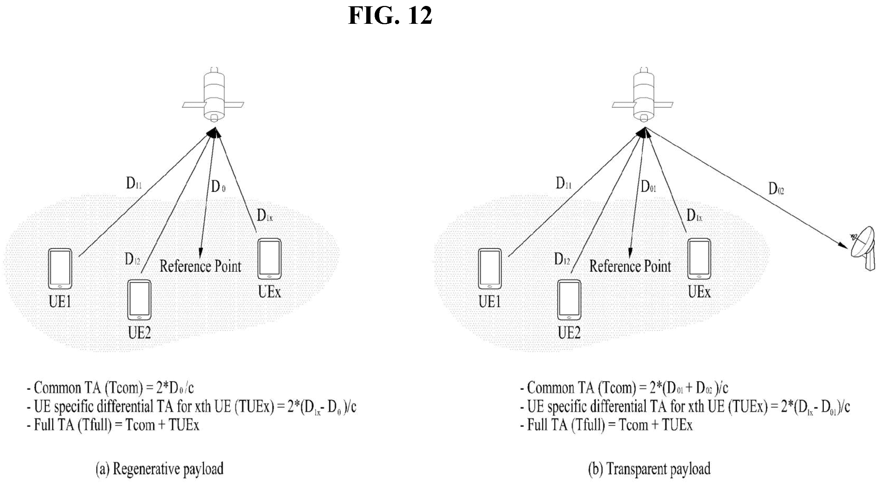

FIG. 12 is a diagram for explaining TAs in each of an NTN scenario based on regenerative payload and an NTN scenario based on transparent payload.

FIG. 12(a) illustrates the NTN scenario based on regenerative payload. The common TA (Tcom) (common to all UEs) may be calculated as 2D0 (distance between satellite and reference signal)/c, and the UE-specific differential TA (TUEx) for an x-th UE (UEx) may be calculated as 2(D1x-D0)/c. The total TA (Tfull) may be calculated as Tcom + TUEx. Here, D1x is the distance between the satellite and UEx, and c is the speed of light.

FIG. 12(b) illustrates the NTN scenario based on transparent payload. The common TA (Tcom) (common to all UEs) may be calculated as 2(D01+D02)/c, and the UE-specific differential TA (TUEx) for an x-th UE (UEx) may be calculated as 2(D1x-D0)/c. The total TA (Tfull) may be calculated as Tcom + TUEx. Here, D01 is the distance between the satellite and the reference point, and D02 is the distance between the satellite and the BS located on the ground.

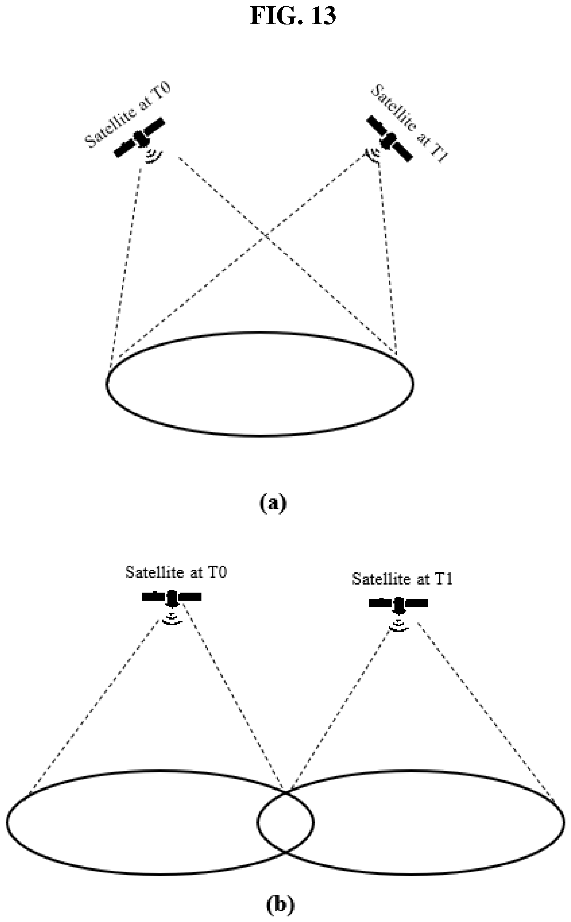

FIG. 13 is a diagram for explaining the type of cell supported by a satellite.

Referring to FIG. 13, depending on supported cell types, cells may be divided into (a) an Earth-fixed beam/cell and (b) a moving cell. The Earth-fixed cell (a) means that a cell is maintained within a specific location on the Earth's surface permanently or for a specific service duration based on the beam steering capability of the satellite. The Earth-moving cell (b) means that a cell moves continuously on the Earth's surface based on a fixed beam served by the satellite rather than using the beam steering capability of the satellite.

The frequency bands considered for NR NTN services are as follows: for bands below 6 GHz, the 2 GHz band (L-band: 1 to 2 GHz and S-band: 2 to 4 GHz) is being considered; and for bands above 6 GHz, the DL 20 GHz band and the UL 30 GHz band (Ka-Band: 26.5 to 40 GHz) are being considered. In particular, the NTN bands supported in Rel-17 are as follows.
- S-band (n256): UL 1980-2010MHz / DL 2170-2200 MHz
- L-band (n255): UL 1626.5-1660.5MHz / DL 1525-1559MHz

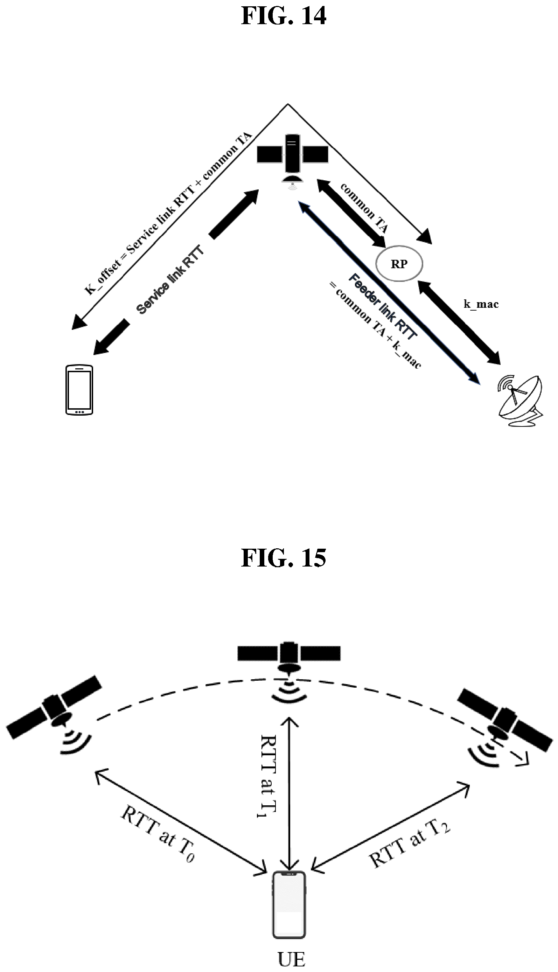

FIG. 14 is a diagram for explaining scheduling offsets in an NTN: K_offset and K_mac. To effectively operate the NTN with a very long RTT, the scheduling offsets: K_offset and K_mac are introduced.

Referring to FIG. 14, *K*_offset represents an offset value indicating the RTT of a UL time synchronization reference point (RP). *K*_offset is the sum of a service link RTT and a common TA (if indicated).

In addition, *k*_mac represents an offset value indicating the RTT between an RP and a gNB.

In Rel-17, two ephemeris formats are supported in Rel-17, and the contents thereof are as follows.
1) Position and velocity state vector ephemeris format: 132 bits (<17 bytes)
   - The field size for position (x, y, z) (m) is 78 bits
   - The field size for velocity (vx, vy, vz) (m/s) is 54 bits
2) Orbital parameter ephemeris format: 164 bits (<21 bytes)
   - Semi-major axis "α" (m) is 33 bits
   - Eccentricity "e" is 20 bits
   - Argument of periapsis "ω" (rad) is 28 bits
   - Longitude of ascending node "Ω" (rad) is 28 bits
   - Inclination "i" (rad) is 27 bits
   - Mean anomaly "M" (rad) at epoch time to is 28 bits

In satellite-based communication, circular polarization is mainly used to enhance the straightness of radio waves. In Rel-17, system information (or SIB) signaling is introduced to inform the UE of polarization information used by the satellite. The polarization types included in the signaling are linear, right-hand circular polarization (RHCP), and left-hand circular polarization (LHCP).

### Timing advance without GNSS in NTN

As described above, when a UE is assumed to have GNSS capability, a TA (e.g., N_{TA,adj}^{UE}) corresponding to a service link, which is a link between an NTN platform (e.g., a satellite) and the UE, is calculated as shown in Table 6.

When a UE does not have GNSS capability or when the GNSS performance of the UE is temporarily degraded due to an obstacle (e.g., a tree, a building, or a structure), accuracy of TA calculation (particularly UE-specific TA calculation) is highly likely to be degraded. The present disclosure is directed to addressing this issue.

First, a TA configuration scheme for a UE without GNSS capability is described.

### Proposal 1

**In the case of a (NTN) UE without GNSS capability, a UE-specific TA (e.g., N_{TA,adj}^{UE}) is not calculated, the corresponding parameter is assumed to be 0, and a specific offset value (e.g., N_{TA,offset}^{UE}) related to a service link is introduced.**

Equation 3 is an example of an equation for determining a TA value based on N_{TA,offset}^{UE}. [Equation 3] ${T}_{TA} = \left({N}_{TA}+{N}_{TA , offset}+{{N}_{TA , adj}}^{common}+{{N}_{TA , adj}}^{UE}+{{N}_{TA , offset}}^{UE}\right) {T}_{c}$

In Proposal 1, GNSS capability may be capability required for a UE to identify location information of the UE. The UE may report whether the corresponding capability is supported and/or information related to GNSS capability of the UE (e.g., estimated accuracy, positioning error variance/mean) to a BS.

In Proposal 1, separately from introducing a new representative offset value, when a UE reports that the UE does not have GNSS capability or when GNSS capability is less than or equal to a specific accuracy level, the BS may indicate/configure the UE not to calculate a UE-specific TA. In this case, the UE-specific TA value becomes a specific constant value, and Equation 4 for T_{TA} calculation may be used without modification. [Equation 4] ${T}_{TA} = \left({N}_{TA}+{N}_{TA , offset}+{{N}_{TA , adj}}^{common}+{{N}_{TA , adj}}^{UE}\right) {T}_{c}$

Alternatively, the value of N_{TA,adj}^{UE} may be configured/indicated as a specific constant/offset value. In this case, the constant/offset value may be configured/applied differently according to an NTN platform type and/or an altitude of the NTN platform. For example, in Equation 4, N_{TA,adj}^{UE} may be configured as a higher-layer parameter.

As another embodiment, a common TA covering a feeder link between a reference point and a satellite may also be replaced with a specific value (e.g., an offset) configured by the BS, instead of being calculated by the UE. Equation 5 and Equation 6 are examples thereof. [Equation 5] ${T}_{TA} = \left({N}_{TA}+{N}_{TA , offset}+{{N}_{TA , adj}}^{common}+{{N}_{TA , adj}}^{UE}+{{N}_{TA , offset}}^{UE}\right) {T}_{c}$

In Equation 5, N_{TA,adj}^{common} may be configured as 0, and N_{TA,adj}^{UE} may be configured as 0. [Equation 6] ${T}_{TA} = \left({N}_{TA}+{N}_{TA , offset}+{{N}_{TA , offset}}^{UE}\right) {T}_{c}$

The UE may calculate a TA as shown in Equation 5 or Equation 6 and apply the calculated TA to UL transmission.

As another embodiment, introduction of an offset value corresponding to a GNSS error into an existing TA calculation equation as shown in Equation 7 may be considered. [Equation 7] ${T}_{TA} = \left({N}_{TA}+{N}_{TA , offset}+{{N}_{TA , adj}}^{common}+{{N}_{TA , adj}}^{UE}+{{N}_{error}}^{UE}\right) {T}_{c}$

In Equation 7, Nₑᵣᵣₒᵣ^{UE} may be, for example, a value representing a GNSS error. The UE may report the value to the BS as UE capability, or may request/report a preferred offset value to the BS (aperiodically/periodically) even in an RRC connected mode. The BS may signal, to the UE, a constant value corresponding to an error for the UE based on the value, and the BS may update the value for the UE over time through higher-layer signaling. The reason for introducing the constant value corresponding to the error is to prevent the N_{TA} value from falling outside an allowable range due to the GNSS error and to facilitate TA control by a gNB.

As another example, instead of using an existing value of N_{TA,offset} described in Table 7 below, an offset corresponding to a value of N_{TA,adj}^{UE} and/or N_{TA,adj}^{common}, that is, a value for covering a service link delay and/or a feeder link delay, may be configured/indicated to the UE by using an N_{TA,offset} parameter. In this case, a TA calculation equation is as shown in Equation 8 below, and N_{TA,offset} is a value separately defined for an NTN UE and/or a UE without GNSS capability, or configured by the BS for the NTN UE and/or the UE. The value of N_{TA,offset} may be configured for each band or may be configured for an NTN platform type and/or an altitude of the NTN platform. [Equation 8] ${T}_{TA} = \left({N}_{TA}+{N}_{TA , offset}\right) {T}_{c}$

An offset value in Proposal 1 (e.g., N_{TA,offset}^{UE}, Nₑᵣᵣₒᵣ^{UE}, and/or N_{TA,offset}) may be differently determined/applied/indicated according to a TA indication method for initial access (RACH transmission) and a TA indication method in an RRC connected mode.

The TA calculation scheme of Proposal 1 may be configured as a separate mode according to GNSS capability. The separate mode may be configured for each bandwidth part (BWP), and switching to or from the separate mode may be performed by BWP switching.

### Proposal 1-1

One or more parameters for enabling a (NTN) UE without GNSS capability to calculate a UE-specific TA (e.g., N_{TA,adj}^{UE} of Equation 4) based on orbit information (ephemeris information) of an NTN platform may be configured for the UE through network signaling, and the UE may calculate N_{TA,adj}^{UE} based on the one or more parameters.

In the same manner as common TA calculation, a UE-specific TA parameter and an epoch time may be configured/indicated to the UE to enable the UE to calculate the UE-specific TA, and Equation 9 below is an example thereof. [Equation 9] ${Delay}_{UE} \left(t\right) = {TA}_{UE} / 2 + {TA}_{UEDrift} / 2 \times \left(t-{t}_{epoch}\right) + {TA}_{UEDriftVariant} / 2 \times {\left(t-{t}_{epoch}\right)}^{2}$

In Equation 9, TA_{UE} denotes a TA_{UE} value, TA_{UEDrift} denotes a drift value of TA_{UE} (a first derivative), and TA_{UEDriftVariant} denotes a variant value of TA_{UEdrift} (a second derivative). Equation 9 is an example including derivatives up to a second derivative, and fewer derivatives (e.g., a first derivative) or more derivatives (e.g., a third derivative) may be included depending on a case. In order for the BS to calculate a UE-specific TA, a terrestrial reference point in an NTN cell may be configured/indicated, and a distance between the terrestrial reference point and the UE may be additionally reported to the BS by using a positioning scheme such as TN.

As another example, referring to Equation 10, assuming that N_{TA,adj}^{UE}=0, a feeder link delay and service link delay may be covered by a scaling value of N_{TA,adj}^{common} calculated using common TA parameters. The beta value may be a value configured by the BS and may be a real number value (e.g., 1.5, 2, 2.5, 3, ...). Alternatively, the beta value may be a value reported as UE capability. [Equation 10] ${T}_{TA} = \left({N}_{TA}+{N}_{TA , offset}+{{N}_{TA , adj}}^{common ∗}β\right) {T}_{c}$

Although the UE-specific TA may be indicated/configured, a method of indicating a variation in TA to be applied per unit time in consideration of constant movement of a satellite may be considered as another approach.

N_{TA,adj}^{UE} is applied based on a value initially reported by the UE or a value configured by the BS, and values to be applied in a specific time duration may be sequentially configured/applied to the UE as differential values (to reduce signaling overhead). For example, over a 10 ms duration from a specific time point n (e.g., N_{TA,adj}^{UE} (n)), the network may signal values of N_{TA,adj}^{UE} (n+i) to be applied per 1 ms, such as [+1, +1, 0, 0, 0, 0, -1, -1, -1, 0], or the like.

Table 7 below is an excerpt from portions of TS38.213 and TS38.133.

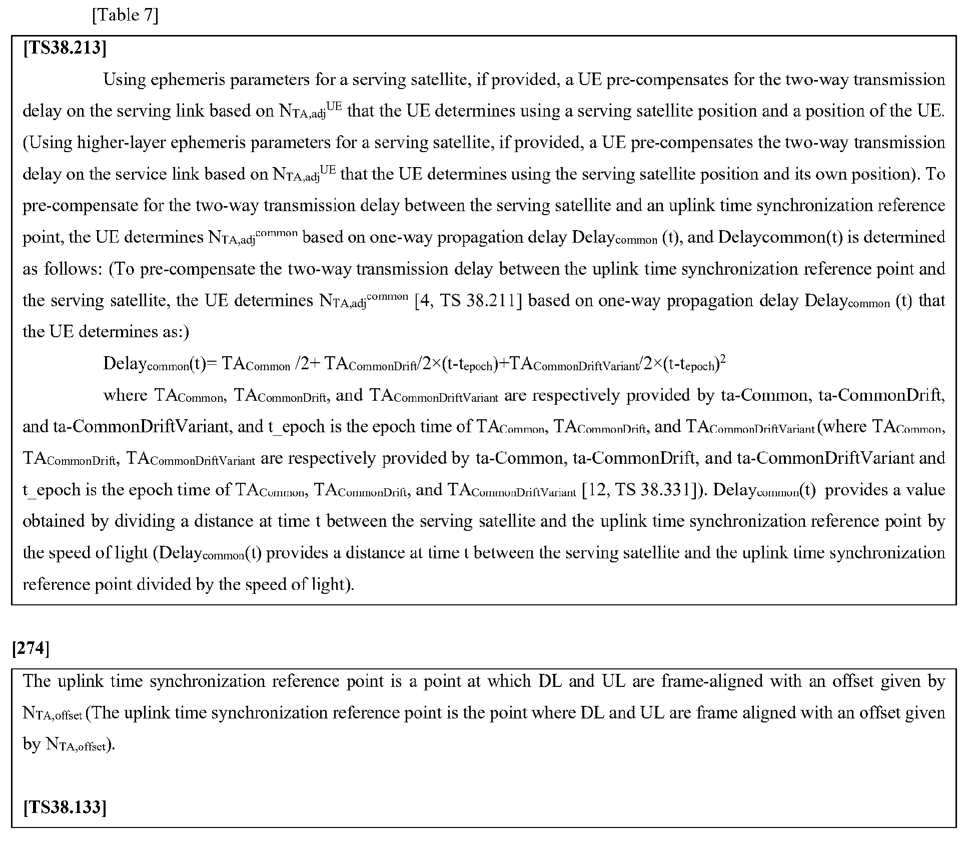

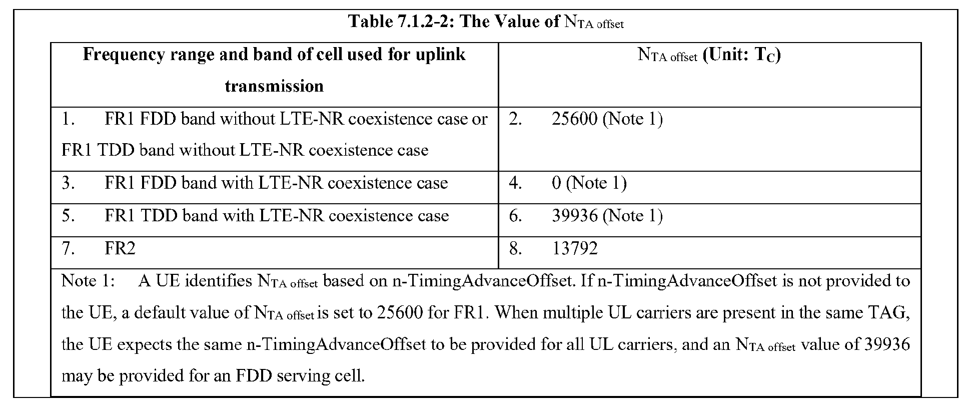

In Proposal 1, when Equation 4 is used in the same manner as before, an N_{TA} value controlled by a MAC-CE may be configured with 12 bits (e.g., absolute TA) or 6 bits (e.g., cumulative TA), as defined in TS 38.213. The 12-bit scheme is an indication method for initial access (RACH transmission), and the latter is an indication method applied in an RRC connected mode and is based on a cumulative TA scheme.

For a UE without GNSS capability, when a new offset is introduced or a parameter corresponding to an offset is used instead as described above, the offset is determined by assuming an RTT (e.g., max/min/median) of an NTN platform. Accordingly, the existing range of NTA values may not be sufficient, and the range needs to be extended. To this end, a new range of NTA values may be defined/configured for the GNSS non-capable UE. Alternatively, as shown in Equation 11 or Equation 12, the existing indication range (i.e., bit-width) may be reused, and scaling α may be applied to the corresponding value. [Equation 11] ${N}_{TA} = {T}_{A} * 16 * 64 / {2}^{u} * α$ [Equation 12] ${N}_{TA_new} = {N}_{TA_old} + \left({T}_{A}-31\right) * 16 * 64 / {2}^{u ∗} α$

In Equation 11/12, α may be set to 2, 3, or 4, or may be configured by the BS.

Alternatively, the GNSS non-capable UE may be configured to operate based on an absolute TA indication at all times, instead of a cumulative TA indication, even in an RRC connected mode. In this case, the absolute TA indication may use the existing index range (e.g., N_{TA} values by index values of T_{A} = 0, 1, 2, ..., 3846), or may use a different value range that is newly defined. That is, although the absolute TA indication is used, the indication range of T_{A} may differ between an indication method for initial access (RACH transmission) and an indication method in an RRC connected mode, and the indication range may also differ according to a type and/or altitude of an NTN platform.

In the above proposal, particularly in relation to TA indication for RACH transmission, a difference may increase between reception times, at the BS, of RACH preambles from a UE having GNSS capability and a UE not having GNSS capability. As a result, a required length of a CP may differ. Accordingly, the BS may configure different RACH formats according to whether the UE has GNSS capability, or may separately configure RACH resources according to a difference in guard period. For example, a UE without GNSS capability may be configured only with a contention-free random access (CFRA) resource.

Table 8 below is an excerpt from another portion of TS 38.213.

**[Table 8]**

| |
|---|
| For an SCS of 2^{u}*15 kHz, a TA command for a TAG indicates a change of the UL timing relative to the current UL timing for the TAG in multiples of 16*(64*Tc)/2^{u}. The start timing of the random access preamble is described in [4, TS 38.211]. |
| (For a SCS of 2^{u}*15 kHz, the TA command for a TAG indicates the change of the uplink timing relative to the current uplink timing for the TAG in multiples of 16*(64*Tc)/2^{u} . The start timing of the random access preamble is described in [4, TS 38.211].) |
| A TA command in a random access response or in an absolute TA command MAC CE, T_{A} for a TAG indicates N_{TA} values by index values of T_{A} = 0, 1, 2, ..., 3846, where an amount of time alignment for the TAG with an SCS of 2^{u}*15 kHz is N_{TA}=T_{A}*16*64/2^{u}. N_{TA} is defined in [4, TS 38.211] and is relative to the SCS of the first UL transmission from the UE after reception of the random access response or the absolute TA command MAC CE. (A timing advance command [11, TS 38.321] in case of random access response or in an absolute timing advance command MAC CE, T_{A}, for a TAG indicates N_{TA} values by index values of T_{A} = 0, 1, 2, ..., 3846, where an amount of the time alignment for the TAG with SCS of 2°*15 kHz is N_{TA}=T_{A}*16*64/2^{u} . N_{TA} is defined in [4, TS 38.211] and is relative to the SCS of the first uplink transmission from the UE after the reception of the random access response or absolute timing advance command MAC CE.) |
| In other cases, a TA command [11, TS 38.321], T_{A} for a TAG indicates adjustment of a current N_{TA} value, N_{TA_old}, to a new NTA value, N_{TA_new}, using index values of T_{A} = 0, 1, 2, ..., 63, where, for an SCS of 2^{u}*15 kHz, N_{TA_new}=N_{TA_old}+(T_{A}-31)*16*64/2^{u}. (In other cases, a timing advance command [11, TS 38.321], T_{A}, for a TAG indicates adjustment of a current N_{TA} value, N_{TA_old}, to the new N_{TA} value, N_{TA_new}, by index values of T_{A} = 0, 1, 2,..., 63, where for a SCS of 2^{u}*15 kHz, N_{TA_new}=N_{TA_old}+(T_{A}-31)*16*64/2^{u} ). |

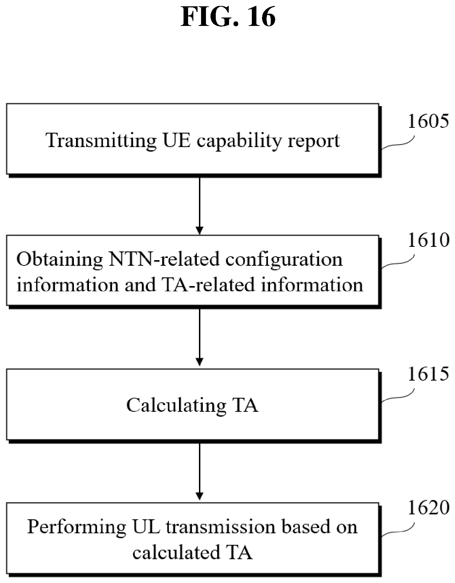

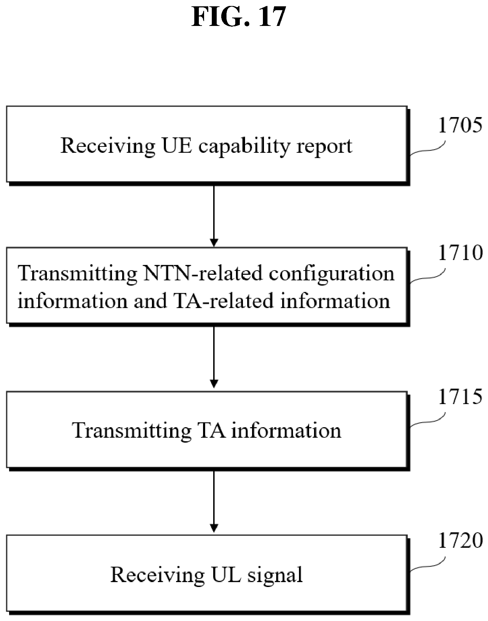

Referring to FIGS. 16 and 17, exemplary operation procedures for a network node and a UE based on Proposal 1 are described. Some of the UE/network node operations in FIGS. 16 and 17 may be omitted.

FIG. 16 illustrates an example of operations of a UE based on Proposal 1/1-1.

Referring to FIG. 16, the UE may transmit a capability report including GNSS capability and/or information indicating whether the UE supports an NTN to a BS (1605).

The UE may obtain NTN-related configuration information and TA-related information from the BS (1610).

The UE may calculate a TA based on the TA-related information received from the BS (1615).

The UE may apply the TA calculated by the UE to transmission of a UL channel/signal and transmit the UL channel/signal to the BS (1620).

FIG. 17 illustrates an example of operations of a network node based on Proposal 1/1-1. The network node may be a BS, but the present disclosure is not limited thereto.

Referring to FIG. 17, the network node may receive a capability report from a UE (1705).

The network node may transmit NTN-related configuration information and TA-related information to the UE (1710).

The network node may transmit, to the UE, TA information for gradually adjusting a TA based on reception of a UL channel/signal transmitted by the UE (1715).

The network node may receive a UL channel/signal from the UE (1720).

### Proposal 2

When a UE having GNSS capability calculates a UE-specific TA in a situation in which GNSS performance is temporarily degraded due to an obstacle or the like, accuracy of the calculation may be degraded.

To address this problem, according to Proposal 2, an NTN UE may request/report, to the BS, a configuration of a duration during which UE-specific TA (and/or common TA) calculation is not performed. In addition, (based on the request/report) the BS may configure/indicate, to the UE, a time duration/window during which the UE does not perform the UE-specific TA (and/or common TA) calculation.

When GNSS performance of the UE is significantly degraded and an error may occur in calculation of a TA value (e.g., a UE-specific TA and/or a common TA) by the UE, UE-autonomous TA calculation may need to be suspended. To this end, based on a request of the UE or based on a result of monitoring whether a UL signal is properly received according to a TA adjusted by the BS, the BS may configure/indicate, to the UE, a timing window during which the UE does not perform autonomous TA adjustment. For example, UL signal monitoring may be performed based on a counter. The BS may count the number of times that a UL signal received from the UE falls outside a boundary expected by the BS, and may indicate/configure/activate the window when the number exceeds a specific threshold count. In addition, release/deactivation of the window configuration may also be based on a request from the UE or based on the counter.

The UE does not update/calculate a UE-specific TA and/or a common TA from time point n+X, where n is a time point at which network signaling (e.g., DCI/MAC-CE) indicating the window is received (where X is expressed in symbols/slots/ms). When the TA is not updated, N_{TA,adj}^{UE} and/or N_{TA,adj}^{common} in Equation 4 may be fixed to the N_{TA,adj}^{UE} and/or N_{TA,adj}^{common} value most recently calculated/updated from time point n.

Alternatively, during the duration indicated by the window, the UE may be configured to calculate the TA using an offset based on Proposal 1. In addition, N_{TA} may always be determined based on an absolute TA indication, rather than a differential TA indication.

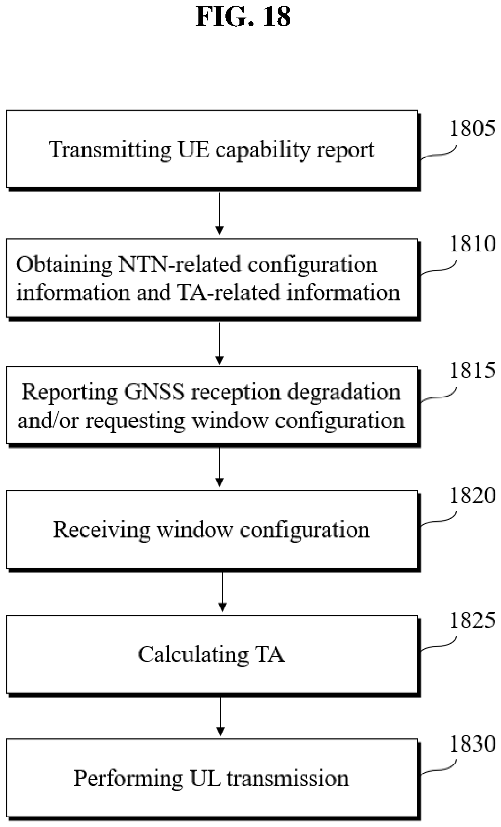

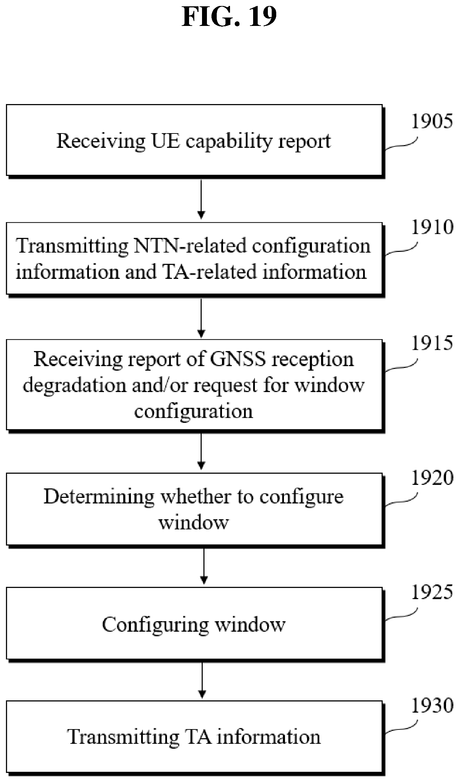

Referring to FIGS. 18 and 19, exemplary operation procedures for a network node and a UE based on Proposal 2 are described. Some of the UE/network node operations in FIGS. 18 and 19 may be omitted.

FIG. 18 illustrates an example of operations of a UE based on Proposal 2.

Referring to FIG. 18, the UE may transmit a capability report including GNSS capability and/or information indicating whether the UE supports an NTN to a BS (1805).

The UE may obtain NTN-related configuration information and TA-related information from the BS (1810).

The UE may report information on GNSS reception degradation to the BS and/or may report/request a configuration of a window during which UE-autonomous TA calculation is not performed (1815).

The UE may receive the configuration of the window during which UE-autonomous TA calculation is not performed from the BS (1820).

The UE may calculate a TA based on the TA-related information received from the BS (1825).

The UE may apply the calculated TA to transmission of a UL channel/signal and transmit the UL channel/signal to the BS (1830).

FIG. 19 illustrates an example of operations of a network node based on Proposal 2. The network node may be a BS, but the present disclosure is not limited thereto.

Referring to FIG. 19, the network node may receive a capability report from a UE (1905).

The network node may transmit NTN-related configuration information and TA-related information to the UE (1910).

The network node may receive, from the UE, information on GNSS reception degradation and/or a report/request for a configuration of a window during which UE-autonomous TA calculation is not performed (1915).

The network node may determine, based on a counter, whether to configure the window during which UE-autonomous TA calculation is not performed (1920).

The network node may configure, for the UE, the window during which UE-autonomous TA calculation is not performed (1925).

The network node may transmit, to the UE, TA information for gradually adjusting a TA based on reception of a UL channel/signal transmitted by the UE (1930).

The network node may receive a UL channel/signal from the UE (1935).

In Proposals 1 and 2, the NTN platform may be a satellite such as a geostationary earth orbit (GEO) satellite, a medium earth orbit (MEO) satellite, or a low earth orbit (LEO) satellite, or may be a moving object such as a high-altitude platform station (HAPS), an unmanned aerial vehicle (UAV), a drone, or an airplane.

It is apparent that examples of the above-described proposed methods may also be included as implementation methods of the present disclosure and thus may be regarded as proposed methods. In addition, the above-described proposed methods may be implemented independently or may be implemented in a combination of some of the proposed methods. A rule may be defined such that the BS informs the UE of information on whether the proposed methods are applied (or information on rules of the proposed methods) through a predefined signal (e.g., a physical layer signal or a higher-layer signal). The higher layer may include, for example, one or more functional layers such as MAC, RLC, PDCP, RRC, and SDAP.

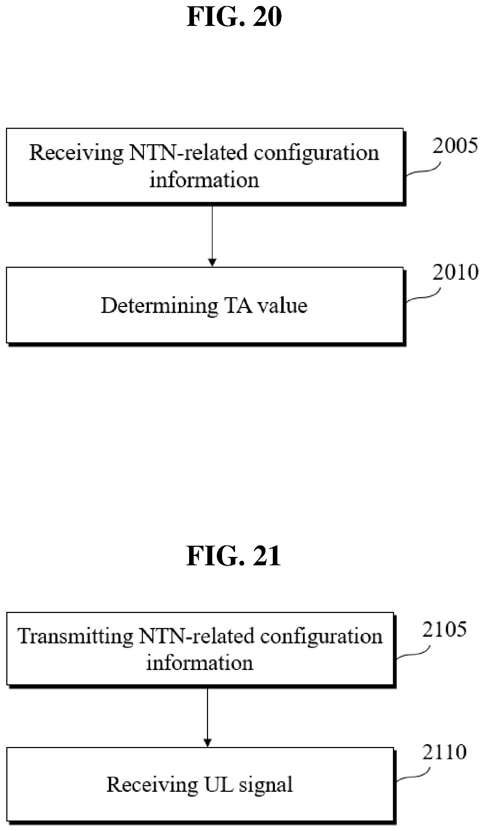

FIG. 21 illustrates an example of operations of a UE according to an embodiment.

Referring to FIG. 21, the UE may receive configuration information related to an NTN through network signaling (2105).

The UE may determine a TA value for a UL of the NTN based on the configuration information (2110). The UE may determine the TA value based on a UE-specific TA parameter for a link between a non-terrestrial node and the UE. Based on the UE not supporting a GNSS or GNSS performance being less than a threshold, the UE may set the UE-specific TA parameter to 0 and then determine the TA value through a TA offset value included in the configuration information.

The TA offset value may be an offset value related to a GNSS error.

The TA value may be determined based on a common TA parameter for a link between the non-terrestrial node and a terrestrial node. Based on the UE not supporting the GNSS or the GNSS performance being less than the threshold, the UE may apply a scaling value to the common TA parameter. The scaling value may be a value configured for the UE by a network or a value reported by the UE to the network.

Based on the UE not supporting the GNSS, a range of the TA value for the UE may be extended beyond a range of a TA value for a UE supporting the GNSS.

Based on the GNSS performance being less than the threshold, the UE may transmit information for requesting a configuration of a window in which the UE does not determine the TA value.

The UE may transmit a UE capability report including at least one of information on whether the GNSS is supported or information on the GNSS performance.

The UE may transmit a UL signal based on the determined TA value.

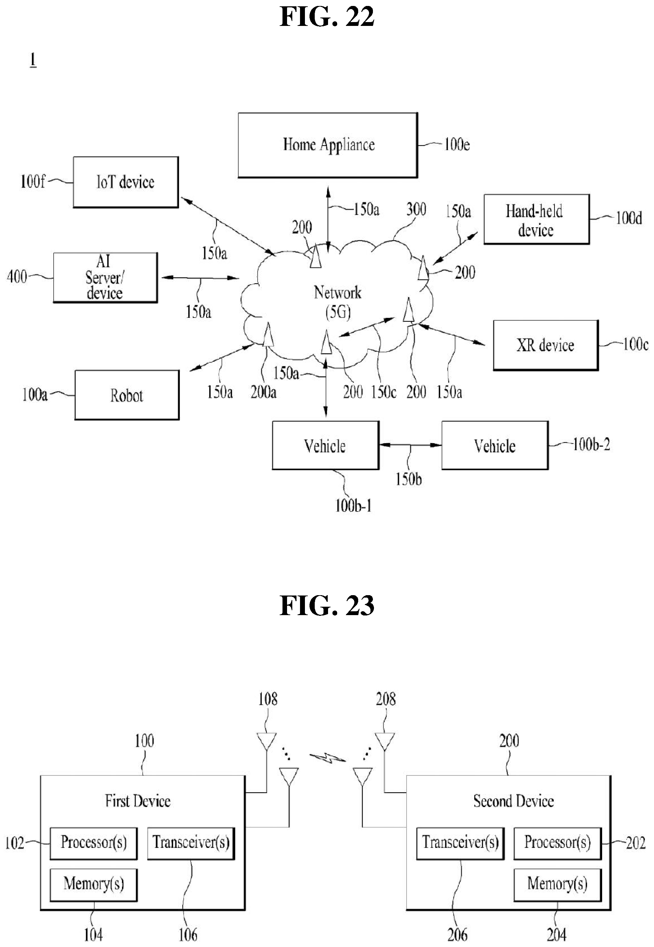

FIG. 22 illustrates an example of operations of a network node according to an embodiment. The network node may be a BS, but the present disclosure is not limited thereto.

Referring to FIG. 22, the network node may transmit configuration information related to an NTN to a UE through network signaling (2205).

The network node may receive a UL signal based on a TA value for a UL of the NTN calculated by the UE (2210).

The TA value may be calculated based on a UE-specific TA parameter for a link between a non-terrestrial node and the UE. Based on the UE not supporting GNSS or GNSS performance being less than a threshold, the UE-specific TA parameter may be set to 0, and the TA value may be calculated through a TA offset value included in the configuration information.

The TA offset value may be an offset value related to a GNSS error.

The TA value may be determined based on a common TA parameter for a link between the non-terrestrial node and a terrestrial node. Based on the UE not supporting the GNSS or the GNSS performance being less than the threshold, a scaling value may be applied to the common TA parameter. The scaling value may be a value configured for the UE by the network node or a value reported by the UE to the network node.

Based on the UE not supporting the GNSS, a range of the TA value for the UE may be extended beyond a range of a TA value for a UE supporting the GNSS.

Based on the GNSS performance being less than the threshold, information for requesting a configuration of a window in which the UE does not determine the TA value may be received from the UE.

The network node may receive, from the UE, a UE capability report including at least one of information on whether the GNSS is supported or information on the GNSS performance.

FIG. 22 illustrates a communication system 1 applied to the present disclosure.

Referring to FIG. 22, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 23 illustrates wireless devices applicable to the present disclosure.

Referring to FIG. 23, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 23.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

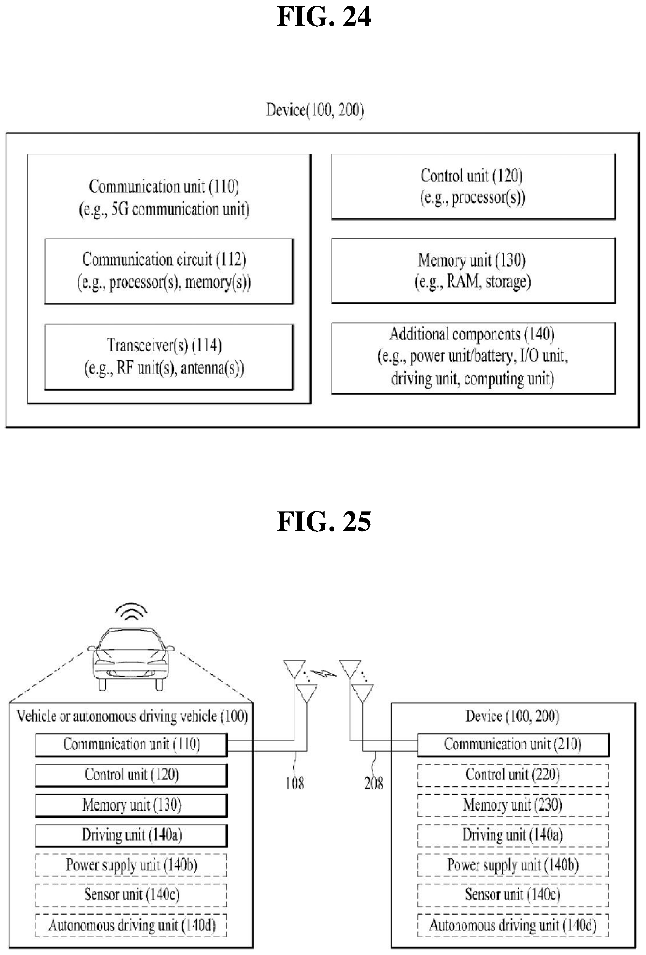

FIG. 24 illustrates another example of a wireless device applied to the present disclosure. The wireless device may be implemented in various forms according to a use-case/service (refer to FIG. 22).

Referring to FIG. 24, wireless devices 100 and 200 may correspond to the wireless devices 100 and 200 of FIG. 23 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 23. For example, the transceiver(s) 114 may include the one or more transceivers 106 and 206 and/or the one or more antennas 108 and 208 of FIG. 23. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 23), the vehicles (100b-1 and 100b-2 of FIG. 23), the XR device (100c of FIG. 23), the hand-held device (100d of FIG. 23), the home appliance (100e of FIG. 23), the IoT device (100f of FIG. 23), a digital broadcast terminal, a hologram device, a public safety device, an MTC device, a medicine device, a fintech device (or a finance device), a security device, a climate/environment device, the AI server/device (400 of FIG. 23), the BSs (200 of FIG. 23), a network node, etc. The wireless device may be used in a mobile or fixed place according to a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 25 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 25, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 24, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

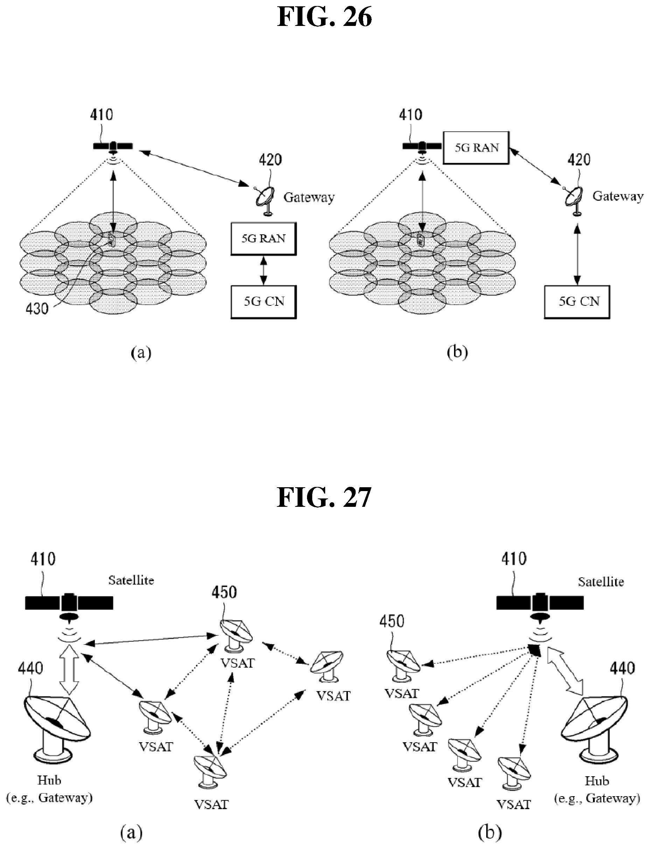

FIG. 26 illustrates an NTN applicable to the present disclosure. For example, the network 300 of FIG. 22 may be configured as the NTN. In addition, the NTN may be used for the above-described devices to perform the operations described herein.

The NTN refer to a wireless network configured with devices that are not fixed on the ground such as satellites. A representative example of the NTN is a satellite network. Based on the NTN, it may be possible to achieve network services with extended coverage and high reliability. For example, the NTN may be configured either independently or in conjunction with existing terrestrial networks to create a wireless communication system.

Use cases capable of being provided in a communication system based on the NTN may be divided into three categories. The "Service Continuity" category may be used to provide network connectivity in geographic areas where access to 5G services is not available through the wireless communication coverage of terrestrial networks. For example, satellite connectivity may be used for UEs associated with pedestrian users, UEs on moving terrestrial platforms (e.g., cars, coaches, trucks, trains), aerial platforms (e.g., commercial or private jets), or maritime platforms (e.g., maritime vessels). In the "Service Ubiquity" category, when terrestrial networks are unavailable (due to, for example, disasters, destruction, economic situations, etc.), satellite connectivity may be utilized for following: IoT, public safety-related emergency networks, home access, and so on. The "Service Scalability" category encompasses services based on the extensive coverage of satellite networks.

Referring to FIG. 26, the NTN includes one or more satellites 410, one or more NTN gateways 420 capable of communicating with the satellites, and one or more UEs (and/or BSs) 430 capable of receiving mobile satellite services from the satellites. In FIG. 26, the explanation focuses on the NTN including satellites for simplicity, but the scope of the present disclosure is not limited thereto. Accordingly, the NTN may include not only the satellites but also aerial vehicles (UAS encompassing tethered UAS (TUA), Lighter than Air UAS (LTA), Heavier than Air UAS (HTA), and all operating in altitudes typically between 8 and 50 km including HAPs).

The satellite 410 is a space-borne vehicle equipped with a bent pipe payload or a regenerative payload telecommunication transmitter and may be located in the LEO, MEO, or GEO. The NTN gateway 420 is an earth station or gateway existing on the surface of the Earth and may provide sufficient RF power/sensitivity to access the satellite. The NTN gateway corresponds to a transport network layer (TNL) node. The one or more UEs (and/or BSs) 430 may be wireless devices (100a to 100f) and/or BS 200 of FIG. 22. In addition, the one or more UEs (and/or BSs) may be implemented as devices. The wireless devices 100a to 100f may be connected to the NTN via the BS 200 and/or satellite 410.

The NTN may have i) a link between a satellite and a UE, ii) a link between satellites, iii) a link between a satellite and an NTN gateway. A service link refers to the radio link between the satellite and UE. Inter-satellite links (ISLs) between satellites may be present if there are multiple satellites. A feeder link refers to the radio link between the NTN gateway and satellite (or UAS platform). The gateway may be connected to a data network and may communicate with the satellite through the feeder link. The UE may communicate with the satellite through the service link.

For NTN operation scenarios, two scenarios based on transparent payload and regenerative payload may be considered. FIG. 26(a) shows an exemplary scenario based on the transparent payload. In the scenario based on the transparent payload, the signal repeated by the payload remains unchanged. The satellite 410 repeats the NR-Uu radio interface from the feeder link to the service link (or vice versa), and a satellite radio interface (SRI) on the feeder link is NR-Uu. The NTN gateway 420 supports all functions required for transmitting signals on the NR-Uu interface. In addition, different transparent satellites may be connected to the same gNB on the ground. FIG. 26(b) shows an exemplary scenario based on the regenerative payload. In the scenario based on the regenerative payload, the satellite 410 may perform some or all of the functions of the conventional BS (e.g., gNB). In other words, the satellite 410 may perform some or all of frequency conversion/demodulation/decoding/modulation. For the service link between the UE and satellite, the NR-Uu radio interface is used, and for the feeder link between the NTN gateway and satellite, the SRI is used. The SRI corresponds to a transport link between the NTN gateway and satellite.

The UE 430 may be connected to a 5G core network (5GCN) through both an NTN-based NG-RAN and a conventional cellular NG-RAN. Alternatively, the UE may be connected to the 5GCN via two or more NTNs (e.g., LEO NTN, GEO NTN, etc.).

FIG. 27 illustrates a very-small-aperture terminal (VSAT) applicable to the present disclosure.

The VSAT 450 may refer to an antenna/device capable of bidirectional communication with an antenna (plate) less than 3 meters. For example, the VSAT may be fixedly located on the ground or may be fixedly mounted on a vehicle/marine vessel. An NTN may be configured with VSATs. Referring to FIG. 27, the VSAT is configured in the form of a mesh topology (FIG. 27(a)) or a start topology (FIG. 27(b)). In the case of the mesh topology, each VSAT may be configured to directly communicate with another VSAT. On the other hand, in the case of the start topology, multiple VSATs may be connected through a hub, and communication between VSATs may be performed through the hub. For example, the VSAT 450 may operate as the NTN gateway 420 and/or BS. For example, the VSAT 450 may operate as an IAB node and/or the BS on IAB links to be described later. For example, the NTN gateway 420 may be connected to the satellite 410, the satellite 410 may be connected to the VSAT 450, and the VSAT 450 may be connected to the UE 430 to provide services. In this case, the VSAT 450 may communicate with the satellite 430 as an IAB Mobile Termination (IAB-MT) and may service the UE 430 as an IAB distributed unit (IAB-DU). In addition, the satellite 410 may operate as a parent node.

The above-described embodiments correspond to combinations of elements and features of the present disclosure in prescribed forms. The respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. In addition, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The present disclosure is applicable to UEs, BSs, or other apparatuses in a wireless mobile communication system.

## Claims

1. A method performed by a user equipment (UE), the method comprising:
receiving configuration information related to a non-terrestrial network (NTN) through network signaling; and
determining a timing advance (TA) value for an uplink of the NTN based on the configuration information,
wherein the UE determines the TA value based on a UE-specific TA parameter for a link between a non-terrestrial node and the UE, and
wherein, based on the UE not supporting a global navigation satellite system (GNSS) or GNSS performance being less than a threshold, the UE sets the UE-specific TA parameter to 0 and then determines the TA value through a TA offset value included in the configuration information.

2. The method of claim 1, wherein the TA offset value is an offset value related to a GNSS error.

3. The method of claim 1, wherein the TA value is determined based on a common TA parameter for a link between the non-terrestrial node and a terrestrial node, and
wherein, based on the UE not supporting the GNSS or the GNSS performance being less than the threshold, the UE applies a scaling value to the common TA parameter.

4. The method of claim 3, wherein the scaling value is a value configured for the UE by a network or a value reported by the UE to the network.

5. The method of claim 1, wherein, based on the UE not supporting the GNSS, a range of the TA value for the UE is extended beyond a range of a TA value for a UE supporting the GNSS.

6. The method of claim 1, further comprising, based on the GNSS performance being less than the threshold, transmitting information for requesting a configuration of a window in which the UE does not determine the TA value.

7. The method of claim 1, further comprising transmitting a UE capability report including at least one of information on whether the GNSS is supported or information on the GNSS performance.

8. The method of claim 1, further comprising transmitting an uplink signal based on the determined TA value.

9. A computer-readable non-transitory recording medium having recorded thereon instructions for performing the method of claim 1.

10. A device comprising:
a memory storing instructions; and
a processor configured to perform operations by executing the instructions,
wherein the operations of the processor comprise:
receiving configuration information related to a non-terrestrial network (NTN) through network signaling; and
determining a timing advance (TA) value for an uplink of the NTN based on the configuration information,
wherein the device determines the TA value based on a device-specific TA parameter for a link between a non-terrestrial node and the device, and
wherein, based on the device not supporting a global navigation satellite system (GNSS) or GNSS performance being less than a threshold, the device sets the device-specific TA parameter to 0 and then determines the TA value through a TA offset value included in the configuration information.

11. The device of claim 10, wherein the device further comprises a transceiver, and
wherein the device is a user equipment (UE) configured to operate in a wireless communication system.

12. The device of claim 10, wherein the device is a processing device configured to control a user equipment (UE) operating in a wireless communication system.

13. A method performed by a network node, the method comprising:
transmitting configuration information related to a non-terrestrial network (NTN) to a user equipment (UE) through network signaling; and
receiving an uplink signal based on a timing advance (TA) value for an uplink of the NTN calculated by the UE,
wherein the TA value is calculated based on a UE-specific TA parameter for a link between a non-terrestrial node and the UE, and
wherein, based on the UE not supporting a global navigation satellite system (GNSS) or GNSS performance being less than a threshold, the UE-specific TA parameter is set to 0, and the TA value is calculated through a TA offset value included in the configuration information.

14. A computer-readable non-transitory recording medium having recorded thereon instructions for performing the method of claim 13.

15. A network node comprising:
a memory storing instructions; and
a processor configured to perform operations by executing the instructions,
wherein the operations of the processor comprise:
transmitting configuration information related to a non-terrestrial network (NTN) to a user equipment (UE) through network signaling; and
receiving an uplink signal based on a timing advance (TA) value for an uplink of the NTN calculated by the UE,
wherein the TA value is calculated based on a UE-specific TA parameter for a link between a non-terrestrial node and the UE, and
wherein, based on the UE not supporting a global navigation satellite system (GNSS) or GNSS performance being less than a threshold, the UE-specific TA parameter is set to 0, and the TA value is calculated through a TA offset value included in the configuration information.
